# NEUE EUROPÄISCHE PATENTSCHRIFT

(11) **EP 3 027 926 B2**
(45) Veröffentlichungstag und Bekanntmachung des Hinweises auf die Entscheidung über den Einspruch: **15.05.2024**
(45) Hinweis auf die Patenterteilung: 03.10.2018
(21) Anmeldenummer: 14726885.8
(22) Anmeldetag: 23.05.2014
(51) Int. Cl.: F16D 55/226, F16D 65/095

(54) **SCHEIBENBREMSE, INSBESONDERE FÜR NUTZFAHRZEUGE, SOWIE BREMSBELAG EINER SOLCHEN SCHEIBENBREMSE**
DISK BRAKE, IN PARTICULAR FOR UTILITY VEHICLES, AND BRAKE PAD OF A DISK BRAKE OF SAID TYPE
FREIN À DISQUE, NOTAMMENT POUR VÉHICULES UTILITAIRES, ET PLAQUETTE DE FREIN D'UN TEL FREIN À DISQUE

(30) Priorität: 29.07.2013 DE 102013012547
(43) Veröffentlichungstag der Anmeldung: 08.06.2016
(73) Patentinhaber: ZF CV Systems Europe BV, 1170 Brussels (BE)
(72) Erfinder: HALFMANN, Joachim, 67482 Venningen (DE)
(74) Vertreter: Leinweber & Zimmermann
(86) Internationale Anmeldenummer: PCT/EP2014/001396
(87) Internationale Veröffentlichungsnummer: WO 2015/014418

(56) Entgegenhaltungen:
- EP-A1- 2 570 689
- EP-A1- 2 570 689
- EP-A2- 1 234 994
- EP-A2- 1 375 952
- WO-A1-2006/045376
- WO-A1-2007/045819
- DE-A1- 2 211 013
- DE-A1- 19 653 488
- DE-A1-102004 002 571
- US-A- 4 373 616
- US-A- 4 373 616
- US-A- 4 881 623
- US-A1- 2005 092 562
- US-B1- 6 286 636

## Beschreibung

Die Erfindung betrifft eine Scheibenbremse, insbesondere für Nutzfahrzeuge, mit einer Bremsscheibe, einem die Bremsscheibe übergreifenden Bremssattel, einem Bremsenträger, einem Bremsbelag und einer Zuspanneinrichtung, die den Bremsbelag beim Bremsen gegen die Bremsscheibe drückt, wobei der Bremsbelag in einem U-förmigen Schacht liegt und die beiden Schenkel des "U" zum Abstützen des Bremsbelags in Umfangsrichtung der Bremsscheibe und der "Boden" des "U" zum Abstützen des Bremsbelags nach radial innen dienen.

Eine gattungsgemäße Scheibenbremse geht z.B. aus DE-A-196 53 488 hervor. Ferner betrifft die Erfindung einen Bremsbelag einer solchen Scheibenbremse, der zwei die Schenkel eines "U" bildende Stützflächen zum Abstützen in Umfangsrichtung und eine den Boden des "U" bildende Stützfläche zum Abstützen nach radial innen aufweist.

Die DE 10 2004 002 571 A1 zeigt eine Scheibenbremse sowie einen Bremsbelag der oben genannten Art.

In der Regel weisen Scheibenbremsen beidseitig einer Bremsscheibe in Belagschächten geführte und abgestützte Bremsbeläge auf, die über eine im Bremssattel angeordnete Zuspannvorrichtung bei einem Bremsvorgang gegen die Bremsscheibe gepreßt werden. Der Bremsbelag besteht dabei regelmäßig aus einer dicken biegesteifen metallischen Rückenplatte als Belagträger, die als Gußteil oder Blechformteil hergestellt ist und auf der der Reibbelag angebracht ist. Über die Stabilität der Rückenplatte soll der Reibbelag möglichst vollflächig und gleichmäßig gegen die Bremsscheibe gedrückt werden. Rückenplatte und Reibbelag sind in ihren Abmessungen in Radialrichtung so dimensioniert, daß sie das Reibband der Bremsscheibe in Radialrichtung abdecken.

Die Abstützung und die Führung des Bremsbelags erfolgt über dessen metallische Rückenplatte in dem jeweiligen Belagschacht, der an dem Bremsenträger oder dem Bremssattel ausgebildet ist.

Die Belagschächte werden auf der Scheibeneinlauf- und der Scheibenauslaufseite, also in Umfangsrichtung durch Stützhörner begrenzt, an denen sich die Bremsbeläge unter Belastung mit ihren Seitenflächen abstützen, wenn sie mit der Bremsscheibe in Reibkontakt kommen, wobei das jeweils belastete Stützhorn das auf den zugeordneten Bremsbelag einwirkende Bremsmoment aufnimmt.

Radial einwärts liegen die Bremsbeläge auf in der Regel ebenen Abstützflächen des Belagschachtes auf. Insgesamt sind die Schächte in der Regel U-förmig ausgebildet.

Bremsbelag und Belagschacht sind hinsichtlich ihrer Konturen bzw. hinsichtlich ihrer Dimensionierung entsprechend der Bremsenausführung/-größe aufeinander abgestimmt. Die den U-förmigen Schacht bildenden Abstützflächen, die mit dem Bremsbelag in Wirkkontakt kommen können, werden bei dem aus Gußmaterial hergestellten Bauelement, in dem der Schacht ausgebildet ist, also dem Bremssattel oder dem Bremsenträger, mechanisch bearbeitet, um die erforderliche Oberflächenqualität und die erforderliche Maßhaltigkeit sicherzustellen.

Bei dieser mechanischen Bearbeitung ist man aus Gründen der Wirtschaftlichkeit bei der Großserienfertigung bestrebt, Abstützflächen zu erzeugen, die möglichst schnell, einfach und ohne zeitaufwendige Werkzeugwechsel realisiert werden können. Daher sollten die zu bearbeitenden Abstützflächen eben bzw. glatt sein. In diesem Falle sind Bearbeitungen mit beispielsweise einem Stirn- oder Wälzfräser möglich.

Bei bekannten Scheibenbremsen, wie etwa nach der DE 10 2004 002 571 A1, ist der Schacht meist rechteckig, d.h. die Schenkel des "U" stehen in einem Winkel von 90° (Toleranzen vernachlässigt) auf dem "Boden" des "U". Diese Ausgestaltung vereinfacht zum einen die Bearbeitung. Zum anderen kann in diesem Falle der Bremsbelag zur Montage/Demontage in Radialrichtung durch eine entsprechende Montageöffnung im Bremssattel eingesetzt bzw. ausgebaut werden. Um dies zu gewährleisten, ist - wie oben bereits ausgeführt - der Schacht rechteckig. Mit anderen Worten ist der Abstand der beiden Schenkel des "U" voneinander an deren radial äußeren Enden gleich dem Abstand an deren radial inneren Enden.

Insbesondere bei dem rechteckig ausgeführten Belagschacht müssen die Bremsbeläge über ein stabil ausgeführtes und am Bremssattel befestigtes Niederhaltesystem (Federn/Niederhaltebügel) gegen Herausfallen gesichert werden. Ferner dient das Niederhaltesystem zum Ausgleich von erforderlichen Funktionsspielen bzw. Toleranzen.

Wegen des begrenzten Platzangebotes für die Bremse sind die seitlichen Abstützhörner in ihrer Radialerstreckung begrenzt. Daher können die daran angebrachten seitlichen Abstützflächen ein Herausdrehen des Bremsbelags bei einem Bremsvorgang nicht zuverlässig unterbinden. Dadurch kann das Löseverhalten des Belags nach einem Bremsvorgang beeinträchtigt sein.

Die DE 694 03 650 T2 zeigt einen Belagträger, der sich in der Draufsicht nach radial innen hin verjüngt und mit seitlichen Ansätzen versehen ist, die formschlüssig in seitliche Führungsnuten des Belagschachtes eingreifen. Derartige Ausgestaltungen sind von kleineren im PKW-Bereich verwendeten Scheibenbremsen bekannt. Oftmals werden dabei dem Lagerspielausgleich dienende und in den Führungsnuten angeordnete Stahlfedern verwendet. Die dabei entstehenden relativ kleinen Kontaktflächen können nicht die Umfangsmomente aufnehmen, wie sie bei Nutzfahrzeugen auftreten. Eine zur Behebung dieses Problems vorgenommene Vergrößerung der einschlägigen Flächen wäre unwirtschaftlich, weil deren Herstellung und Bearbeitung Sonderwerkzeuge (Formfräser) und einen höheren Umrüstaufwand (Maschinen/Vorrichtungen) erfordert. Darüber hinaus hat der Sattel der Bremse nach der DE 694 03 650 T2 keine Radialöffnung zum Montieren/Demontieren der Bremsbeläge. Daher muß der Bremssattel zum Belagein-/ausbau abgenommen werden. Schließlich können die Bremsbeläge auch nur in Axialrichtung aus den Formschlußbereichen entfernt werden.

Der Erfindung liegt die Aufgabe zugrunde, die Scheibenbremse der eingangs genannten Art derart weiterzubilden, daß zum einen die Bearbeitung der Abstützflächen des Schachtes einfach ist und zum anderen nicht die Gefahr des Herausdrehens oder Herausfallens des Bremsbelages aus dem Schacht besteht.

Der Abstand der beiden Schenkel des "U" ist voneinander an deren radial äußeren Enden kleiner als der Abstand an deren radial inneren Enden.

Unter dem Ende eines Schenkels wird dabei erfindungsgemäß jeweils das radial innen bzw. radial außen liegende Ende der in Umfangsrichtung wirkenden Abstützfläche verstanden.

Der Boden des "U" kann zumindest abschnittweise bogenförmig ausgestaltet sein.

Erfindungsgemäß ist vorgesehen, daß ein dem Abstützen nach radial innen dienender Abschnitt der Schachtkontur gradlinig verläuft und mit einer Ebene, die senkrecht auf einer durch die Bremsenachse laufenden Mittelebene des Bremsbelages steht, einen Winkel einschließt, der 2° bis 3° misst.

Nach einer besonders bevorzugten Ausführungsform der Erfindung ist vorgesehen, daß ein erster dem Abstützen nach radial innen dienender Abschnitt der Schachtkontur gradlinig verläuft und mit einer Ebene, die senkrecht auf einer durch die Bremsenachse laufenden Mittelebene des Bremsbelages steht, einen ersten Winkel einschließt und ein zweiter dem Abstützen nach radial innen dienender Abschnitt der Schachtkontur gradlinig verläuft und mit der Ebene, die senkrecht auf der durch die Bremsenachse laufenden Mittelebene des Bremsbelages steht, einen zweiten Winkel einschließt, wobei der erste und der zweite Winkel gleich sind.

Nach einer anderen Ausführungsform können die beiden Winkel aber auch voneinander unterschiedlich sein.

Erfindungsgemäß ist vorgesehen, daß ein dem Abstützen nach radial innen dienender Abschnitt der Schachtkontur gradlinig verläuft und mit einem Schenkel des "U" einen Winkel einschließt, der 90° beträgt (Toleranzen vernachlässigt).

Der Bremsbelag liegt erfindungsgemäß bevorzugt auf einer Zuspannseite der Bremsscheibe.

Der Schacht ist dabei erfindungsgemäß weiter bevorzugt an dem Bremsenträger ausgebildet. Er kann aber auch an dem Bremssattel ausgebildet sein.

Bei dem Bremssattel handelt es sich erfindungsgemäß weiter bevorzugt um einen Gleitsattel.

Nach einer weiter bevorzugten Ausführungsform der Erfindung weist der Bremssattel eine Montageöffnung zum Montieren/Demontieren des Bremsbelages von radial außen her auf.

Ferner ist erfindungsgemäß weiter bevorzugt eine Niederhalteeinrichtung zum Halten des Bremsbelages in dem Schacht vorgesehen.

Zum Nachstellen bei Verschleiß kann die erfindungsgemäße Bremse eine Nachstelleinrichtung aufweisen.

Der erfindungsgemäße Bremsbelag zeichnet sich dadurch aus, daß der Abstand der beiden Schenkel des "U" voneinander an den radial äußeren Enden kleiner als der Abstand an deren radial inneren Enden ist.

Wiederum gilt, daß unter dem Ende eines Schenkels das radial außen bzw. radial innen liegende Ende der wirksamen Abstützfläche des Bremsbelages in Umfangsrichtung verstanden wird.

Die den Boden des "U" bildende Stützfläche kann zumindest abschnittweise bogenförmig ausgestaltet sein.

Besonders bevorzugt ist es erfindungsgemäß, daß der Boden des "U" zumindest abschnittweise gradlinig ist.

Nach der Erfindung ist vorgesehen, daß ein Abschnitt der Stützfläche zum Abstützen nach radial innen gradlinig verläuft und mit einer Ebene, die senkrecht auf einer durch die Bremsenachse laufenden Mittelebene des Bremsbelages steht, einen Winkel einschließt, der 2° bis 3° mißt.

Nach einer besonders bevorzugten Ausführungsform der Erfindung ist vorgesehen, daß ein erster Abschnitt der den Boden des "U" bildenden Stützfläche gradlinig verläuft und mit einer Ebene, die senkrecht auf einer durch die Bremsenachse laufenden Mittelebene des Bremsbelages steht, einen ersten Winkel einschließt und ein zweiter Abschnitt der den Boden des "U" bildenden Stützfläche gradlinig verläuft und mit der Ebene, die senkrecht auf der durch die Bremsenachse laufenden Mittelebene des Bremsbelages steht, einen zweiten Winkel einschließt, wobei der erste und der zweite Winkel gleich sind.

Erfindungsgemäß kann aber auch vorgesehen sein, daß die beiden genannten Winkel voneinander unterschiedlich sind.

Nach der Erfindung ist vorgesehen, daß bei dem Bremsbelag ein Abschnitt der den Boden des "U" bildenden Stützfläche gradlinig verläuft und mit einem Schenkel des "U" einen Winkel einschließt, der 90° beträgt (Toleranzen vernachlässigt).

Schließlichhandeltes sich bei dem erfindungsgemäßen Bremsbelag bevorzugt um den zuspannseitigen Bremsbelag.

Die Abstützflächen sind sowohl bei dem Schacht als auch bei dem Belagträger eben ausgestaltet. Dadurch ergeben sich optimierte Bearbeitungs- und Auf-/Anlagebereiche (Kontaktbereiche).

Die radialen Kontaktbereiche liegen beidseitig der Bremsenachse und sind vorteilhaft aus Stabilitätsgründen mittels eines bevorzugt bogenförmig ausgestalteten Verbindungsjochs miteinander verbunden.

Diese Lösung hat mehrere Vorteile:
Das Bearbeitungswerkzeug (Stirn- oder Walzenfräser) muß kein Sonderwerkzeug mit speziellen Konturen sein. Es wird lediglich um den Winkel bei der mechanischen Bearbeitung der Kontaktflächen geneigt bzw. angestellt, der dem Anstellwinkel des gradlinigen Abschnitts des Bodens des "U" entspricht. Dementsprechend sind auch die Rückenplatten der Bremsbeläge (ohne Hinterschneidungen bzw. Ansätze oder Vorsprünge) wirtschaftlich herstellbar.

Hinsichtlich des Verfahrensablaufs bei der Herstellung der Bremse bzw. des Bremsbelags sind keine Änderungen im Vergleich mit dem herkömmlichen Verfahren erforderlich.

Bei der erfindungsgemäßen Lösung besteht keine Gefahr des Herausdrehens oder Herausfallens des Bremsbelages, weil die Stützhörner den radial außen liegenden Rückenplattenbereich übergreifen. Sie laufen V-förmig nach radial außen zu. Damit können auch an dem Niederhaltebügel bzw. an der Niederhaltefeder Materialoptimierungen vorgenommen werden, weil übermäßige Radialbewegungen des Belages beispielsweise bei Schlechtwegbedingungen oder einem Federbruch nicht mehr nur vom Niederhaltebügel und der Niederhaltefeder abgefangen werden müssen, sondern über die radiale Formschlüssigkeit wegen der V-Form. Auch bei den erfindungsgemäßen Lösungen ist es bevorzugt, daß die Niederhaltefedern - wie beim Stand der Technik - Funktionsspiele und Toleranzen in den Anlage-/Auflagebereichen ausgleichen.

Sind die Anstellwinkel der gradlinig verlaufenden Abschnitte des Bodens des "U" gleich, ergibt sich vorteilhaft eine spiegelbildliche Symmetrie zwischen dem zuspannseitigen Bremsbelag bei einer linken / rechten Bremse in der Fahrzeugachse, was die Zuordnung der Beläge bei der Montage vereinfacht.

Weil die beiden Schenkel des "U" nach radial außen aufeinander zulaufen, ist ein axialer Einbau des Bremsbelages in die entsprechende Schachtführung erforderlich, nachdem der Belag über die Sattelöffnung von radial außen in den Sattel eingebracht worden ist. Das gleiche gilt in umgekehrter Reihenfolge für den Ausbau.

Daher ist bei dieser Ausführung die Erfindung auch nur - hier bei einem Gleitsattel - auf einer der beiden Bremsenseiten, wie etwa der Zuspannseite verwirklicht. Beidseitig passen wegen der Bremsscheibe und des angebauten Bremssattels die Beläge regelmäßig nicht in solche Führungen.

Daher wird bevorzugt die "Mischausführung" verwendet. Mit anderen Worten werden felgenseitig ein Belag und ein Schacht wie bei herkömmlichen Bremsen verwendet, zuspannseitig aber die erfindungsgemäße Lösung. Dies hat auch den Vorteil, daß unterschiedlich in einer Bremsenkonfiguration zu verwendende Reibmaterialqualitäten wegen der unterschiedlichen Rückplatten-/Belagschachtformen nicht falschseitig in der Bremse verbaut werden können.

Zum Einbau wird ohne Demontage des Bremssattels das Druckteil/die Druckspindel zurückgenommen, bis zuspannseitig genügend axialer Freiraum zwischen dem Sattelgehäuse und der Belagschachtführung vorhanden ist, um den Bremsbelag mit entsprechender Dicke zuerst über die Radialöffnung in Zwischenposition zu verbringen und danach dann in Axialrichtung zur Bremsscheibe hin in die entsprechende Schachtführung einzuschieben. Danach kann dann bei entsprechender Sattelausrichtung der felgenseitige Bremsbelag radial eingebaut werden. Dann erfolgt die Montage des Niederhaltesystems. Der Ausbau erfolgt in umgekehrter Reihenfolge.

Größenmäßig können, selbst bei Gleichheit der oben genannten Anstellwinkel, diese gegenüber der Ebene, die senkrecht auf einer durch die Bremsenachse verlaufenden Mittelebene des Bremsbelages steht, je nach Bremsentyp und in Winkelschritten unterschiedlich angestellt sein, was insbesondere die Zuordnung der richtigen Bremsbeläge zur richtigen Scheibenbremse erleichtert. Damit kann eine Kodierung erzeugt werden. Passen nämlich die Winkelverhältnisse auf der Zuspannseite nicht zueinander, kann kein Einbau erfolgen, weil sich Flächen überdecken.

Weiterhin können die genannten Anstellwinkel je nach Belastung und Einsatzfall der Bremse im Fahrzeug aber auch ungleich sein. Dies kann beliebig und dem Einsatzfall entsprechend auf der Bremseneinlaufseite oder der Bremsenauslaufseite sein, wodurch sich gegebenenfalls belastungsoptimierte Lagerungen ergeben. Generell wird gegenüber dem "rechteckigen" Schacht mit den Anstellwinkeln (ob gleich oder ungleich) eine Belastungsoptimierung des Bremsenteils erreicht, weil Umfangsmomente jetzt auch vermehrt aufgeteilt als Druckspannungen in die radialen Bereiche eingeleitet werden.

Auch sind damit genaue Zuordnungen mittels Kodierung möglich. Die geometrischen Verhältnisse können beispielsweise derart gewählt werden, daß es bei Falscheinbauten zu Flächenüberdeckungen kommt. Es kann auch erreicht werden, daß der Radialabstand für das erforderliche Funktionsspiel (Abstand zwischen dem Niederhaltebügel und dem oberen Randbereich der Rückenplatte) bei Falscheinbau nicht mehr gegeben ist, so daß der Niederhaltebügel aufsetzt und nicht mehr ordnungsgemäß im Bremssattel gelagert und daran befestigt werden kann.

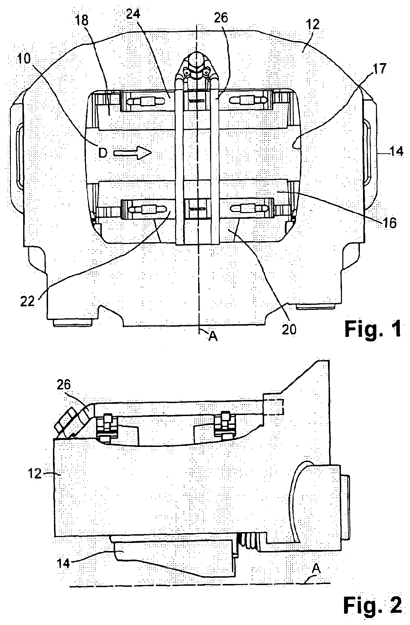

Im folgenden ist die Erfindung anhand bevorzugter Ausführungsbeispiele unter Bezugnahme auf die beiliegende Zeichnung mit weiteren Einzelheiten näher erläutert. Dabei zeigen
- Figur 1: eine Draufsicht auf eine erfindungsgemäße Scheibenbremse,
- Figur 2: eine Seitenansicht der Bremse nach Figur 1,
- Figur 3: eine schematische geschnittene Teilansicht einer Bremse nach dem Stand der Technik,
- Figur 4: die gleiche Ansicht wie Figur 3, jedoch von einem ersten Ausführungsbeispiel der Erfindung,
- Figur 5: die gleiche Ansicht wie Figur 3, jedoch von einem zweiten Ausführungsbeispiel der Erfindung, und
- die Figuren 6 bis 8: die gleichen Ansichten wie Figur 3, jedoch jeweils in Fällen eines Falscheinbaus.

Zu der in den Zeichnungen dargestellten Scheibenbremse gehört eine Bremsscheibe 10, ein die Bremsscheibe 10 übergreifender Bremssattel 12, ein Bremsenträger 14, ein zuspannseitiger Bremsbelag 16, ein felgenseitiger Bremsbelag 18 und eine nur schematisch angedeutete Zuspanneinrichtung 20. Zum Niederhalten der aus metallischer Rückenplatte und Reibmaterial bestehenden Bremsbeläge 16 und 18 dienen Niederhaltefedern 22 und 24, die von einem Niederhaltebügel 26 nach radial innen vorgespannt sind. Der Niederhaltebügel 26 verläuft in Richtung der Bremsenachse A über eine Montageöffnung 17 und ist fest, aber lösbar am Bremssattel befestigt.

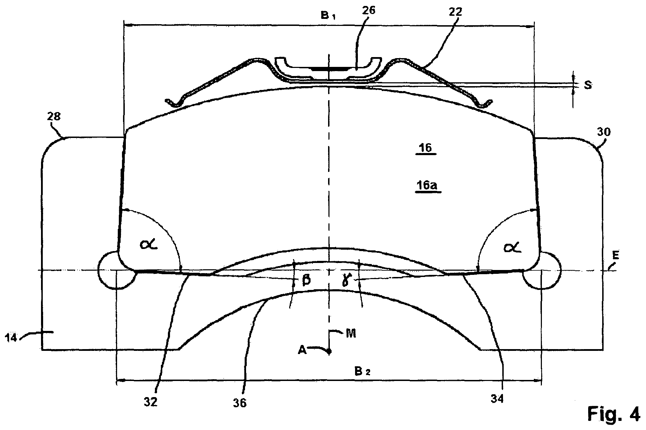

Die Bremsenachse ist mit dem Buchstaben A gekennzeichnet, die bevorzugte Drehrichtung der Bremsscheibe 10 mit einem Pfeil D. Der Buchstabe M bezeichnet eine durch die Bremsenachse A laufende Mittelebene des zuspannseitigen Bremsbelags 16, eine darauf senkrecht stehende Ebene E liegt in den Darstellungen nach den Figuren 4 bis 8 horizontal.

Der Bremssattel 12 weist die Montageöffnung 17 auf, durch die die Bremsbeläge 16, 18 von radial außen her in das Innere des Bremssattels 12 eingeführt werden und wieder herausgenommen werden können. Die Zuspanneinrichtung 20 ist mit einer in der Zeichnung nicht dargestellten Nachstelleinrichtung zum Verschleißausgleich versehen.

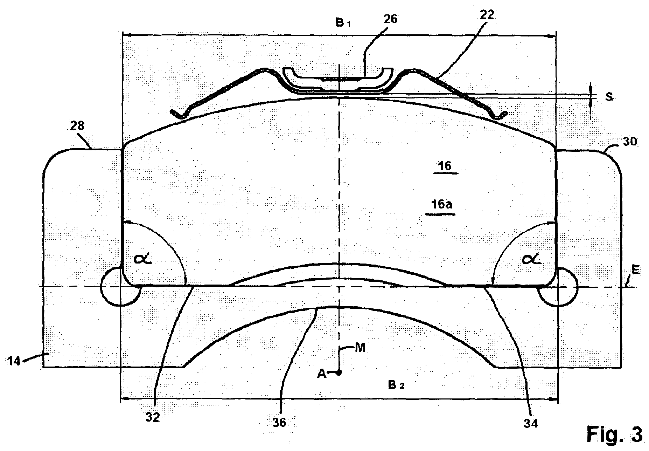

Figur 3 zeigt den zuspannseitigen Bremsbelag 16 in Draufsicht auf seine Rückenplatte 16a. Er ist in einem U-förmigen Schacht angeordnet, wobei die Schenkel des "U" von einstückig mit dem Bremsenträger 14 ausgebildeten Stützhörnern 28, 30 gebildet sind und der Boden von zwei gradlinigen Stützflächen 32, 34 sowie einem bogenförmigen Verbindungsjoch 36 gebildet ist.

Zwischen der von dem Niederhaltebügel 26 vorgespannten Niederhaltefeder 22 und der Rückenplatte 16a ist ein radiales Funktionsspiel S vorhanden.

Die Stützhörner 28 und 30 stützen die Rückenplatte 16a und damit den Bremsbelag 16 in Umfangsrichtung ab. Die Stützflächen 32 und 34 stützen nach radial innen ab.

Die Stützhörner 28 und 30 schließen bei der herkömmlichen Scheibenbremse nach Figur 3 mit den beiden Stützflächen 32 und 34 einen rechten Winkel α ein. Darüber hinaus laufen ihre den Schacht bestimmenden Stützflächen parallel zueinander, so daß der Schacht eine insgesamt rechteckige Kontur hat. Mit anderen Worten ist der Abstand B₁ der die Schenkel des "U" bildenden Stützhörner an deren radial äußeren Enden genauso groß wie der Abstand B₂ an ihren radial inneren Enden.

Beispielsweise bei Schlechtwegstrecken müssen nach radial außen gerichtete Bewegungen des Bremsbelages 16 bzw. der Rückenplatte 16a komplett von der Niederhaltefeder 22 bzw. dem Niederhaltebügel 26 aufgenommen werden.

Anders bei dem Ausführungsbeispiel der Erfindung nach Figur 4:
Hier ist der Abstand B₁ (radial außen) kleiner als der Abstand B₂ (radial innen). Mit anderen Worten sind die beiden Schenkel des "U" nicht parallel zueinander, sondern laufen nach radial außen hin aufeinander zu. Dadurch trägt der Bremsenträger 14 bzw. tragen die Stützhörner 28 und 30 dazu bei, den Bremsbelag 16 gegen eine Bewegung nach radial außen zu sichern.

Wenngleich die beiden Schenkel des "U" nach radial außen aufeinander zu laufen, bilden sie doch jeweils mit den Stützflächen 32 und 34 einen Winkel α von 90° (Toleranzen vernachlässigt). Deshalb schließen sie mit der Ebene E einen Winkel β bzw. γ ein, der in dem dargestellten Ausführungsbeispiel nach Figur 4 etwa 3° beträgt. Bei Gleichheit der Winkel β bzw. γ kann die Winkelstellung auch in Winkelschritten verändert bzw. vergrößert werden, wodurch eine zwischen Bremsbelag und Schachtkontur erzeugte Kodierung vorliegt. Dadurch sind genaue Zuordnungen des richtigen Bremsbelages zur richtigen Bremsenausführung sichergestellt. Passen die Winkelstellungen zwischen Bremsbelag und Schachtkontur nicht zueinander, ist kein Einbau möglich, weil sich Flächen überdecken.

Insbesondere dann, wenn der Winkel α 90° beträgt, ist die Bearbeitung der Abstützflächen an dem Bremsenträger 14 (Stützhörner 28, 30 / Stützflächen 32, 34) besonders einfach, weil mit sehr einfachen Werkzeugen gearbeitet werden kann.

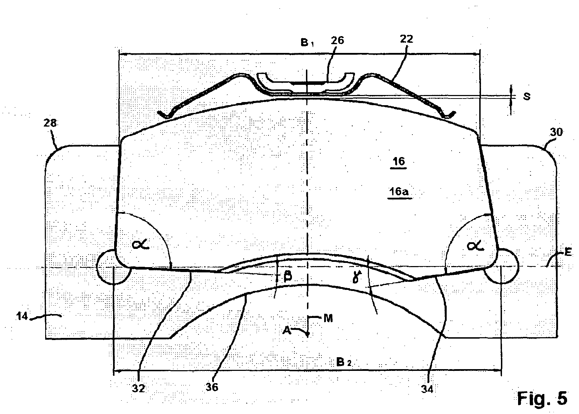

Die obigen Beschreibungen beziehen sich insbesondere auf die Ausgestaltung des Bremsenträgers 14 zur Ausbildung des U-förmigen Schachtes. Sie gelten im übertragenen Sinne aber auch für den Bremsbelag 16, der eine dem Schacht entsprechende Außenkontur hat. Das gilt selbstverständlich nicht nur für die Ausgestaltung nach Figur 4, sondern auch für die Ausgestaltung nach Figur 5.

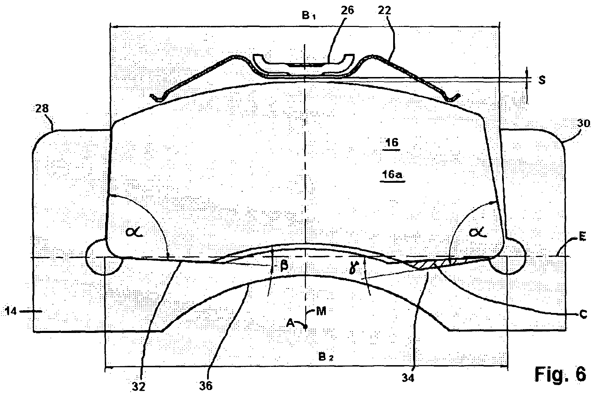

Die Ausgestaltung nach Figur 5 unterscheidet sich von derjenigen nach Figur 4 dadurch, daß die Winkel β und γ nicht gleich sind. Dies hat Vorteile, insbesondere im Hinblick auf eine eventuell gewünschte Kodierung. In diesem Zusammenhang wird verwiesen auf die Figuren 6 bis 8, in denen Kombinationen gezeigt sind, die nicht zueinander passen, weil die Kodierungen nicht zueinander passen.

Bei dem Beispiel nach Figur 6 sind die Winkel β und γ bei dem Schacht gleich, jedoch bei dem eingesetzten Bremsbelag ungleich, weshalb wegen einer Überdeckung C kein Einbau möglich ist.

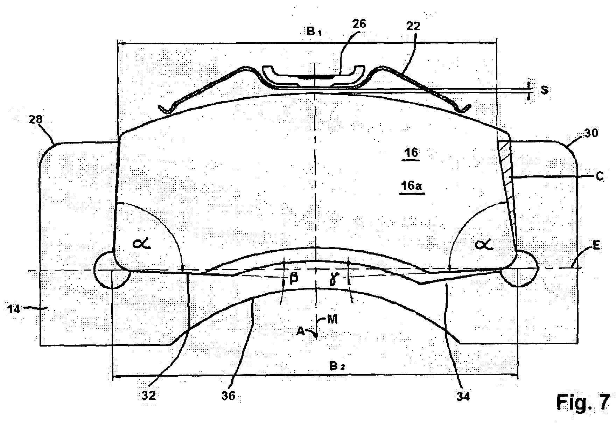

Bei dem Beispiel nach Figur 7 ist es umgekehrt: Hier sind die Winkel β und γ bei dem Schacht gleich, jedoch bei dem Bremsbelag unterschiedlich. Wiederum ist ein Einbau wegen einer Überdeckung C nicht möglich.

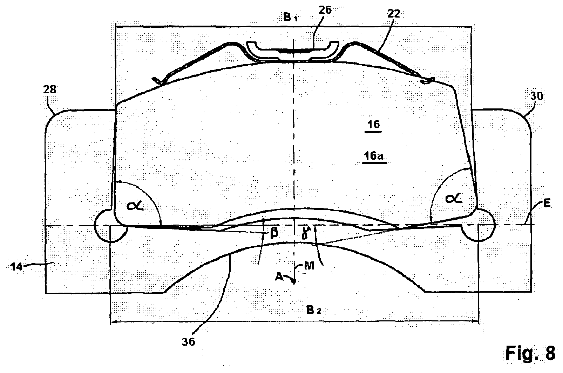

Auch bei dem Ausführungsbeispiel nach Figur 8 passen Bremsbelag und Schacht nicht zueinander, weshalb der Bremsbelag insgesamt in Radialrichtung zu weit außen liegt. Er liegt insbesondere um eine Strecke zu weit außen, die größer ist als das radiale Funktionsspiel S, weshalb nicht nur kein Funktionsspiel mehr vorhanden ist, sondern auch der Niederhaltebügel 26 nicht mehr montiert werden kann.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein. Ebenso sei darauf hingewiesen, daß die beiden der radialen Abstützung des Bremsbelages dienenden Abschnitte / Stützflächen des Belagschachtes nicht unbedingt durch ein Verbindungsjoch miteinander verbunden sein müssen. Auch ohne das Verbindungsjoch wird die Wirkung der Erfindung erzielt.

## Patentansprüche

1. Scheibenbremse, insbesondere für Nutzfahrzeuge,
mit einer Bremsscheibe (10),
einem die Bremsscheibe übergreifenden Bremssattel (12),
einem Bremsenträger (14),
einem Bremsbelag (16, 16a und 18) und
einer Zuspanneinrichtung (20), die den Bremsbelag beim Bremsen gegen die Bremsscheibe drückt, wobei
der Bremsbelag in einem U-förmigen Schacht liegt und die beiden Schenkel (28, 30) des "U" zum Abstützen des Bremsbelags in Umfangsrichtung der Bremsscheibe und der "Boden" (32, 34, 36) des "U" zum Abstützen des Bremsbelags nach radial innen dienen, und der Abstand (B₁) der beiden Schenkel des "U" voneinander an deren radial äußeren Enden kleiner als der Abstand (B₂) an deren radial inneren Enden ist,
**dadurch gekennzeichnet, dass**
ein dem Abstützen nach radial innen dienender Abschnitt (32, 34) der Schachtkontur gradlinig verläuft und mit einer Ebene (E), die senkrecht auf einer durch die Bremsenachse (A) laufenden Mittelebene (M) des Bremsbelages (16, 16a, 18) steht, einen Winkel (β, γ) einschließt, der 2° bis 3° misst und
ein dem Abstützen nach radial innen dienender Abschnitt (32, 34) der Schachtkontur gradlinig verläuft und mit einem Schenkel (28, 30) des "U" einen Winkel (α) einschließt, der 90° beträgt.

2. Scheibenbremse nach Anspruch 1, **dadurch gekennzeichnet, daß** der Boden (32, 34, 36) des "U" zumindest abschnittweise (36) bogenförmig ist.

3. Scheibenbremse nach Anspruch 1 oder 2, **dadurch gekennzeichnet, daß** ein erster dem Abstützen nach radial innen dienender Abschnitt (32) der Schachtkontur gradlinig verläuft und mit einer Ebene (E), die senkrecht auf einer durch die Bremsenachse (A) laufenden Mittelebene (M) des Bremsbelages (16, 16a, 18) steht, einen ersten Winkel (β) einschließt, und
ein zweiter dem Abstützen nach radial innen dienender Abschnitt (34) der Schachtkontur gradlinig verläuft und mit der Ebene (E), die senkrecht auf der durch die Bremsenachse (A) laufenden Mittelebene (M) des Bremsbelages (16, 16a, 18) steht, einen zweiten Winkel (β) einschließt, wobei der erste und der zweite Winkel gleich sind.

4. Scheibenbremse nach Anspruch 1 oder 2, **dadurch gekennzeichnet, daß** ein erster dem Abstützen nach radial innen dienender Abschnitt (32) der Schachtkontur gradlinig verläuft und mit einer Ebene (E), die senkrecht auf einer durch die Bremsenachse (A) laufenden Mittelebene (M) des Bremsbelages (16, 16a, 18) steht, einen ersten Winkel (β) einschließt,
ein zweiter dem Abstützen nach radial innen dienender Abschnitt (34) der Schachtkontur gradlinig verläuft und mit der Ebene (E), die senkrecht auf der durch die Bremsenachse (A) laufenden Mittelebene (M) des Bremsbelages (16, 16a, 18) steht, einen zweiten Winkel (y) einschließt, wobei der erste und der zweite Winkel voneinander unterschiedlich sind.

5. Scheibenbremse nach einem der vorangehenden Ansprüche,
**dadurch gekennzeichnet, daß** der Bremsbelag (16, 16a) auf einer Zuspannseite der Bremsscheibe liegt.

6. Scheibenbremse nach einem der vorangehenden Ansprüche,
**dadurch gekennzeichnet, daß** der Schacht an dem Bremsenträger (14) ausgebildet ist.

7. Scheibenbremse nach einem der Ansprüche 1 bis 4, **dadurch gekennzeichnet, daß** der Schacht an dem Bremssattel (12) ausgebildet ist.

8. Scheibenbremse nach einem der vorangehenden Ansprüche, **dadurch gekennzeichnet, daß** der Bremssattel (12) ein Gleitsattel ist.

9. Scheibenbremse nach einem der vorangehenden Ansprüche, **dadurch gekennzeichnet, daß** der Bremssattel (12) eine Montageöffnung (17) zum Montieren/Demontieren des Bremsbelages (16, 16a, 18) von radial außen her aufweist.

10. Scheibenbremse nach einem der vorangehenden Ansprüche, **gekennzeichnet durch** eine Niederhalteeinrichtung (22, 24, 26) zum Halten des Bremsbelages in dem Schacht.

11. Scheibenbremse nach einem der vorangehenden Ansprüche, **gekennzeichnet durch** eine Nachstelleinrichtung zum Nachstellen bei Verschleiß.

12. Bremsbelag einer Scheibenbremse nach einem der vorangehenden Ansprüche, der zwei die Schenkel eines "U" bildende Stützflächen zum Abstützen in Umfangsrichtung und eine den Boden des "U" bildende Stützfläche zum Abstützen nach radial innen aufweist, wobei der Abstand der beiden Schenkel des "U" voneinander an den radial äußeren Enden kleiner als der Abstand an deren radial inneren Enden ist,
**dadurch gekennzeichnet, dass**
ein Abschnitt der Stützfläche zum Abstützen nach radial innen gradlinig verläuft und mit einer Ebene (E), die senkrecht auf einer durch die Bremsenachse (A) laufenden Mittelebene (M) des Bremsbelages steht, einen Winkel (β, γ) einschließt, der 2° bis 3° misst und
ein Abschnitt der den Boden des "U" bildenden Stützfläche gradlinig verläuft und mit einem Schenkel des "U" einen Winkel (α) einschließt, der 90° beträgt.

13. Bremsbelag nach Anspruch 12, **dadurch gekennzeichnet, daß** die den Boden des "U" bildende Stützfläche zumindest abschnittweise bogenförmig ist.

14. Bremsbelag nach Anspruch 12 oder 13, **dadurch gekennzeichnet, daß** der Boden des "U" zumindest abschnittweise gradlinig ist.

15. Bremsbelag nach einem der Ansprüche 12 bis 14, **dadurch gekennzeichnet, daß** ein erster Abschnitt der den Boden des "U" bildenden Stützfläche gradlinig verläuft und mit einer Ebene (E), die senkrecht auf einer durch die Bremsenachse (A) laufenden Mittelebene (M) des Bremsbelages steht, einen ersten Winkel (β) einschließt, und ein zweiter Abschnitt der den Boden des "U" bildenden Stützfläche gradlinig verläuft und mit der Ebene, die senkrecht auf der durch die Bremsenachse (A) laufenden Mittelebene (M) des Bremsbelages steht, einen zweiten Winkel (γ) einschließt, wobei der erste und der zweite Winkel gleich sind.

16. Bremsbelag nach einem der Ansprüche 12 bis 14, **dadurch gekennzeichnet, daß** ein erster Abschnitt der den Boden des "U" bildenden Stützfläche gradlinig verläuft und mit einer Ebene (E), die senkrecht auf einer durch die Bremsenachse (A) laufenden Mittelebene (M) des Bremsbelages steht, einen ersten Winkel (β) einschließt, ein zweiter Abschnitt der den Boden des "U" bildenden Stützfläche gradlinig verläuft und mit der Ebene (E), die senkrecht auf der durch die Bremsenachse (A) laufenden Mittelebene (M) des Bremsbelages steht, einen zweiten Winkel (γ) einschließt, wobei der erste und der zweite Winkel voneinander unterschiedlich sind.

17. Bremsbelag nach einem der Ansprüche 12 bis 16, **dadurch gekennzeichnet, daß** er der zuspannseitige Bremsbelag (16, 16a) ist.

## Claims

1. Disc brake, in particular for commercial vehicles, having a brake disc (10), a brake calliper (12) which reaches over the brake disc, a brake carrier (14), a brake lining (16, 16a and 18), and a brake application device (20) which presses the brake lining against the brake disc during braking, the brake lining lying in a U-shaped shaft, and the two limbs (28, 30) of the "U" serving to support the brake lining in the circumferential direction of the brake disc, and the "bottom" (32, 34, 36) of the "U" serving to support the brake lining radially to the inside, and the spacing (B₁) of the two limbs of the "U" from one another at their radially outer ends being smaller than the spacing (B₂) at their radially inner ends, **characterized in that** a section (32, 34) of the shaft contour, which section (32, 34) serves for support radially to the inside, runs rectilinearly and encloses an angle (β, γ) which measures from 2° to 3° with a plane (E) which lies perpendicularly on a centre plane (M) of the brake lining (16, 16a, 18), which centre plane (M) runs through the brake axis (A), and a section (32, 34) of the shaft contour, which section (32, 34) serves for support radially to the inside, runs rectilinearly and encloses an angle (α) which is 90° with a limb (28, 30) of the "U".

2. Disc brake according to Claim 1, **characterized in that** the bottom (32, 34, 36) of the "U" is arcuate at least in sections (36).

3. Disc brake according to Claim 1 or 2, **characterized in that** a first section (32) of the shaft contour, which first section (32) serves for support radially on the inside, runs rectilinearly and encloses a first angle (β) with a plane (E) which lies perpendicularly on a centre plane (M) of the brake lining (16, 16a, 18), which centre plane (M) runs through the brake axis (A), and a second section (34) of the shaft contour, which second section (34) serves for support radially to the inside, runs rectilinearly and encloses a second angle (β) with the plane (E) which lies perpendicularly on the centre plane (M) of the brake lining (16, 16a, 18), which centre plane (M) runs through the brake axis (A), the first and the second angle being identical.

4. Disc brake according to Claim 1 or 2, **characterized in that** a first section (32) of the shaft contour, which first section (32) serves for support radially to the inside, runs rectilinearly and encloses a first angle (β) with a plane (E) which lies perpendicularly on a centre plane (M) of the brake lining (16, 16a, 18), which centre plane (M) runs through the brake axis (A), a second section (34) of the shaft contour, which second section (34) serves for support radially to the inside, runs rectilinearly and encloses a second angle (γ) with the plane (E) which lies perpendicularly on the centre plane (M) of the brake lining (16, 16a, 18), which centre plane (M) runs through the brake axis (A), the first and the second angle being different from one another.

5. Disc brake according to one of the preceding claims, **characterized in that** the brake lining (16, 16a) lies on a brake application side of the brake disc.

6. Disc brake according to one of the preceding claims, **characterized in that** the shaft is configured on the brake carrier (14).

7. Disc brake according to one of Claims 1 to 4, **characterized in that** the shaft is configured on the brake calliper (12).

8. Disc brake according to one of the preceding claims, **characterized in that** the brake calliper (12) is a sliding calliper.

9. Disc brake according to one of the preceding claims, **characterized in that** the brake calliper (12) has a mounting opening (17) for mounting/dismantling the brake lining (16, 16a, 18) radially from the outside.

10. Disc brake according to one of the preceding claims, **characterized by** a hold-down device (22, 24, 26) for holding the brake lining in the shaft.

11. Disc brake according to one of the preceding claims, **characterized by** an adjusting device for adjusting in the case of wear.

12. Brake lining of a disc brake according to one of the preceding claims, which brake lining has two supporting faces which form the limbs of a "U" for supporting in the circumferential direction and a supporting face which forms the bottom of the "U" for supporting radially to the inside, the spacing of the two limbs of the "U" from one another at the radially outer ends being smaller than the spacing at their radially inner ends, **characterized in that** a section of the supporting face for supporting runs rectilinearly radially to the inside and encloses an angle (β, γ) which measures from 2° to 3° with a plane (E) which lies perpendicularly on a centre plane (M) of the brake lining, which centre plane (M) runs through the brake axis (A), and a section of the supporting face which forms the bottom of the "U" runs rectilinearly and encloses an angle (α) which is 90° with a limb of the "U".

13. Brake lining according to Claim 12, **characterized in that** the supporting face which forms the bottom of the "U" is arcuate at least in sections.

14. Brake lining according to Claim 12 or 13, **characterized in that** the bottom of the "U" is rectilinear at least in sections.

15. Brake lining according to one of Claims 12 to 14, **characterized in that** a first section of the supporting face which forms the bottom of the "U" runs rectilinearly and encloses a first angle (β) with a plane (E) which lies perpendicularly on a centre plane (M) of the brake lining, which centre plane (M) runs through the brake axis (A), and a second section of the supporting face which forms the bottom of the "U" runs rectilinearly and encloses a second angle (γ) with the plane which lies perpendicularly on the centre plane (M) of the brake lining, which centre plane (M) runs through the brake axis (A), the first and the second angle being identical.

16. Brake lining according to one of Claims 12 to 14, **characterized in that** a first section of the supporting face which forms the bottom of the "U" runs rectilinearly and encloses a first angle (β) with a plane (E) which lies perpendicularly on a centre plane (M) of the brake lining, which centre plane (M) runs through the brake axis (A), a second section of the supporting face which forms the bottom of the "U" runs rectilinearly and encloses a second angle (γ) with the plane (E) which lies perpendicularly on the centre plane (M) of the brake lining, which centre plane (M) runs through the brake axis (A), the first and the second angle being different from one another.

17. Brake lining according to one of Claims 12 to 16, **characterized in that** it is the brake application-side brake lining (16, 16a).

## Revendications

1. Frein à disque, destiné notamment à des véhicules utilitaires, ledit frein à disque comprenant
un disque de frein (10),
un étrier de frein (12) qui s'engage par-dessus le disque de frein,
un support de frein (14),
une plaquette de frein (16, 16a et 18) et
un dispositif d'application (20) qui presse la plaquette de frein contre le disque de frein lors du freinage,
la plaquette de frein étant située dans une cavité en forme de U et les deux branches (28, 30) du « U » servant à supporter la plaquette de frein dans la direction périphérique du disque de frein et le « fond » (32, 34, 36) du « U » servant à supporter la plaquette de frein radialement vers l'intérieur, et la distance (B₁) entre les deux branches du « U » au niveau de leurs extrémités radialement extérieures étant inférieure à la distance (B₂) au niveau de leurs extrémités radialement intérieures,
**caractérisé en ce que**
une portion (32, 34) du contour de cavité, laquelle sert de support radialement vers l'intérieur, s'étend en ligne droite et forme avec un plan (E), qui est perpendiculaire à un plan médian (M) de la plaquette de frein (16, 16a, 18) passant par l'axe de frein (A), un angle (β, γ) qui mesure 2° à 3° et
une portion (32, 34) du contour de cavité, laquelle sert de support radialement vers l'intérieur, s'étend en ligne droite et forme avec une branche (28, 30) du « U » un angle (α) qui est de 90°.

2. Frein à disque selon la revendication 1, **caractérisé en ce que** le fond (32, 34, 36) du « U » est courbé au moins par portions (36).

3. Frein à disque selon la revendication 1 ou 2, **caractérisé en ce qu'**une première portion (32) du contour de cavité, laquelle sert de support radialement vers l'intérieur, s'étend en ligne droite et forme avec un plan (E), qui est perpendiculaire à un plan médian (M) de la plaquette de frein (16, 16a, 18) passant par l'axe de frein (A), un premier angle (β) et
une deuxième portion (34) du contour de cavité, laquelle sert de support radialement vers l'intérieur, s'étend en ligne droite et forme avec le plan (E), qui est perpendiculaire au plan médian (M) de la plaquette de frein (16, 16a, 18) passant par l'axe de frein (A), un deuxième angle (β), les premier et deuxième angles étant égaux.

4. Frein à disque selon la revendication 1 ou 2, **caractérisé en ce qu'**une première portion (32) du contour de cavité, laquelle sert de support radialement vers l'intérieur, s'étend en ligne droite et forme avec un plan (E), qui est perpendiculaire à un plan médian (M) de la plaquette de frein (16, 16a, 18) passant par l'axe de frein (A), un premier angle (β),
une deuxième portion (34) du contour de cavité, laquelle sert de support radialement vers l'intérieur, s'étend en ligne droite et forme avec le plan (E), qui est perpendiculaire au plan médian (M) de la plaquette de frein (16, 16a, 18) passant par l'axe de frein (A), un deuxième angle (γ), les premier et deuxième angles étant différents l'un de l'autre.

5. Frein à disque selon l'une des revendications précédentes, **caractérisé en ce que** la plaquette de frein (16, 16a) est située sur un côté d'application du disque de frein.

6. Frein à disque selon l'une des revendications précédentes, **caractérisé en ce que** la cavité est formée sur le support de frein (14).

7. Frein à disque selon l'une des revendications 1 à 4, **caractérisé en ce que** le puis est formé sur l'étrier de frein (12).

8. Frein à disque selon l'une des revendications précédentes, **caractérisé en ce que** l'étrier de frein (12) est un étrier coulissant.

9. Frein à disque selon l'une des revendications précédentes, **caractérisé en ce que** l'étrier de frein (12) comporte une ouverture de montage (17) destinée au montage/démontage de la plaquette de frein (16, 16a, 18) radialement depuis l'extérieur.

10. Frein à disque selon l'une des revendications précédentes, **caractérisé par** un dispositif de maintien (22, 24, 26) destiné à maintenir la plaquette de frein dans la cavité.

11. Frein à disque selon l'une des revendications précédentes, **caractérisé par** un dispositif de réajustement destiné à effectuer un réajustement en cas d'usure.

12. Plaquette de frein d'un frein à disque selon l'une des revendications précédentes, qui comporte deux surfaces d'appui formant les branches d'un « U » et servant de support dans la direction périphérique et une surface d'appui formant le fond du « U » et servant de support radialement vers l'intérieur,
la distance entre les deux branches du « U » au niveau des extrémités radialement extérieures étant inférieure à la distance au niveau de leurs extrémités radialement intérieures,
**caractérisée en ce que**
une portion de la surface d'appui servant de support radialement vers l'intérieur s'étend en ligne droite et forme avec un plan (E), qui est perpendiculaire à un plan médian (M) de la plaquette de frein passant par l'axe de frein (A), un angle (β, γ) qui mesure de 2° à 3° et
une portion de la surface d'appui formant le fond du « U » s'étend en ligne droite et forme avec une branche du « U » un angle (α) qui est de 90°.

13. Plaquette de frein selon la revendication 12, **caractérisée en ce que** la surface d'appui formant le fond du « U » est courbée au moins par portions.

14. Plaquette de frein selon la revendication 12 ou 13, **caractérisée en ce que** le fond du « U » est rectiligne au moins par portions.

15. Plaquette de frein selon l'une des revendications 12 à 14, **caractérisée en ce qu'**une première portion de la surface d'appui formant le fond du « U » s'étend en ligne droite et forme avec un plan (E), qui est perpendiculaire à un plan médian (M) de la plaquette de frein passant par l'axe de frein (A), un premier angle (β), et une deuxième portion de la surface d'appui formant le fond du « U » s'étend en ligne droite et forme avec le plan, qui est perpendiculaire au plan médian (M) de la plaquette de frein passant par l'axe de frein (A), un deuxième angle (γ), les premier et deuxième angles étant égaux.

16. Plaquette de frein selon l'une des revendications 12 à 14, **caractérisée en ce qu'**une première portion de la surface d'appui formant le fond du « U » s'étend en ligne droite et forme avec un plan (E), qui est perpendiculaire à un plan médian (M) de la plaquette de frein passant par l'axe de freinage (A), un premier angle (β), une deuxième portion de la surface d'appui formant le fond du « U » s'étend en ligne droite et forme avec le plan (E), qui est perpendiculaire au plan médian (M) de la plaquette de frein passant par l'axe de frein (A), un deuxième angle (γ), les premier et deuxième angles étant différents l'un de l'autre.

17. Plaquette de frein selon l'une des revendications 12 à 16, **caractérisée en ce que** ladite plaquette de frein est la plaquette de frein (16, 16a) du côté application.
